# EUROPÄISCHE PATENTSCHRIFT

(11) **EP 0 478 996 B1**
(45) Veröffentlichungstag und Bekanntmachung des Hinweises auf die Patenterteilung: **05.06.1996**
(21) Anmeldenummer: 91115256.9
(22) Anmeldetag: 10.09.1991
(51) Int. Cl.: H02K 13/04, H01R 39/32

(54) **Hakenkollektor**
Hook collector
Collecteur à crochets

(30) Priorität: 01.10.1990 DE 4031015
(43) Veröffentlichungstag der Anmeldung: 08.04.1992
(73) Patentinhaber: Licentia Patent-Verwaltungs-GmbH, D-60596 Frankfurt (DE)
(72) Erfinder: Pöpelt, Bernhard, W-2900 Oldenburg (DE)
(74) Vertreter: Vogl, Leo, Dipl.-Ing.

(56) Entgegenhaltungen:
- DE-A- 2 744 419
- US-A- 4 792 714

## Beschreibung

Die Erfindung bezieht sich auf einen Hakenkollektor gemäß dem Oberbegriff des Anspruchs

Durch die DE 27 44 419 ist ein Hakenkollektor nach dem Oberbegriff des Anspruchs bekannt, bei dem jeweils mehr als ein Wicklungsdraht pro Haken befestigbar und mit der zugehörigen Kollektorlamelle kontaktierbar ist. Dabei ist der Haken unterhalb des Außenrandes der Lamelle angeformt und unter Bildung einer aen ersten Wicklungsdraht aufnehmenden und dem Durchmesser dieses Drahts angepaßten Vertiefung zwischen dem Haken und dem Außenrand der Lamelle zum Außenrand der Lamelle hin im Abstand zu dieser in radialer Richtung abgebogen. Diese Abbiegung ist so gewählt, daß beim Einziehen des zweiten Wicklungsdrahts dieser in direktem Kontakt zum Haken radial oberhalb des ersten Drahts angeordnet ist. Es ist auch möglich die Drähte radial nebeneinander anzuordnen.

Hakenkollektoren in dieser oder einer ähnlichen Ausgestaltung sind für die Aufnahme von zwei radial übereinander oder nebeneinander liegenden Drähten je Haken geeignet. Abgesehen davon, daß hierbei im vom jeweiligen Haken abgegrenzten Raum nicht mehr als zwei übereinanderliegende Drähte untergebracht werden können, würden bei drei unter einem Haken befindlichen Drähten Schweißprobleme auftreten. Diese bestehen in erster Linie darin, daß bei drei unter einem Haken befindlichen Drähten infolge des Anpreßdrucks der Schweißelektrode der eine oder andere Draht abgequetscht wird und daher eine reproduzierbar sichere elektrische Kontaktierung der Drähte mit den Haken bzw. mit der zugehörigen Kollektorlamelle nicth gewähnleistet ist.

Weiterhin ist durch die US - A - 4 792 714 ein Kommutator bekannt, bei dem zwei einander räumlich gegenüberliegende Lamellen des Kollektors jeweils mit zwei Haken versehen sind. Die daneben angeordneten Lamellen sind schmaler und weisen nur einen Haken auf. Bei dieser Anordnung ist für jeden Draht ein eigener Haken mit Kommutator vorgesehen. Hierdurch können zwar dickere Drähte verarbeitet werden. Es gibt aber Probleme, wenn wenigstens zwei Drähte der Ankerwicklung radial übereinanderliegend beziehungsweise nebeneinanderliegend an den Haken des Kommutators automatisch befestigt werden sollen.

Durch die DE - U 88 04 196 ist ein Kommutator bekannt, bei dem jedes Kommutatorsegment einen Anschlußabschnitt für die elektrisch leitende Verbindung mit einer Wicklung eines Ankers und einen einstückig mit dem Segment ausgebildeten, fahnenförmigen Teil aufweist. Dieses fahnenförmige Teil ist vom Kommutatorsegment zur Schaffung eines Raumes für ein Überbrückungs- oder Entstörelement, abragend ausgebildet.

Der Erfindung liegt die Aufgabe zugrunde einen Hakenkollektor zu schaffen, der ein Bewickeln von Ankem geringen Durchmessers mit verhältnismäßig großen Drahtquerschnitten bezw. mit parallelen Drähten ermöglicht, wobei an sich drei oder mehrere Drähte (Windung einschließlich Drahtanfang mit Drahtende) ohne Schweiß - und Kontaktierungsprobleme Platz finden können.

Diese Aufgabe ist erfindungsgemäß durch die Merkmale im kennzeichneten Teil des Anspruchs gelöst.

Die Erfindung wird im nachstehenden anhand der Zeichnung erläutert.

Es zeigen:
- Figur 1: Zwei Lamellen eines herkömmlichen Hakenkollektors mit einem aus einer aus zwei Drähten bestehenden Parallel-Wicklung versehenen Anker, wobei sich unter einem Haken zwei und unter dem anderen Haken drei Drähte befinden.
- Figur 2: Eine Ansicht entlang des Schnittes A - A durch Figur 1
- Figur 3: Eine Ansicht längs des Schnitte B - B durch Fig. 1
- Figur 4: Eine Frontansicht eines nach der Erfindung ausgebildeten Kollektors.
- Figur 5: Eine Ansicht entlang des Schnittes C-C durch Figur 4.
- Figur 6: Eine Abwicklung des Kollektors gemäß Figur 4 mit angedeutetem Spulenverlauf.
- Figur 7: Eine Kollektorlamelle mit zwei Haken und mit unter einem Haken befindlichem Wicklungsanfang.

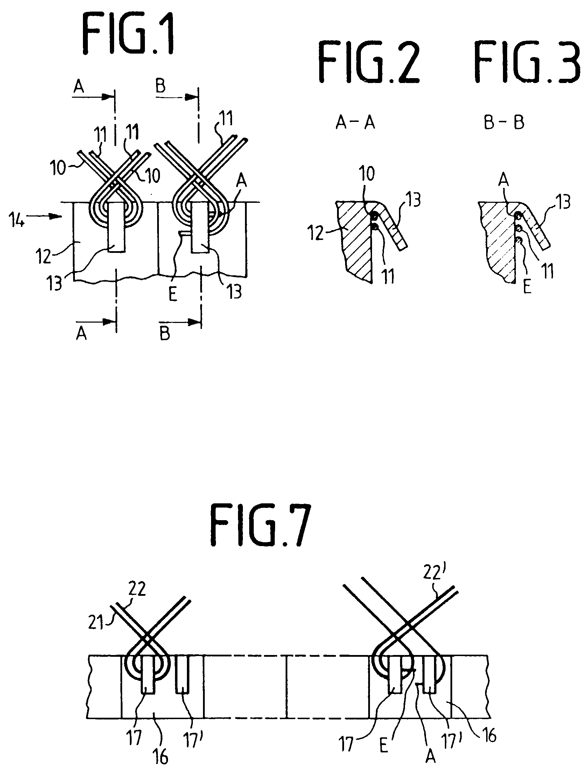

Wie aus den Figuren 1 bis 3 ersichtlich ist, liegen bei einer aus zwei parallelen Drähten 10 und 11 gewickelten Ankerwicklung und bei einem n Kollektorlamellen 12 und n Haken 13 aufweisenden Kollektor 14 jeweils zwei Drähte 10 und 11 unter n-2 Haken 13, während sich unter zwei Haken 13 drei Drähte befinden, nämlich ein durchgeschleifter Draht 11 (2. Wicklung) sowie der Wicklungsanfang A und das Wicklungsende E. Bei den drei unter einem Haken 13 liegenden Drähten 11, A und E ergeben sich die erwähnten Schweiß- bzw. Kontaktierungsprobleme einschließlich einer Beschränkung auf das Bewickeln der Anker mit relativ geringen Dröhtstärken.

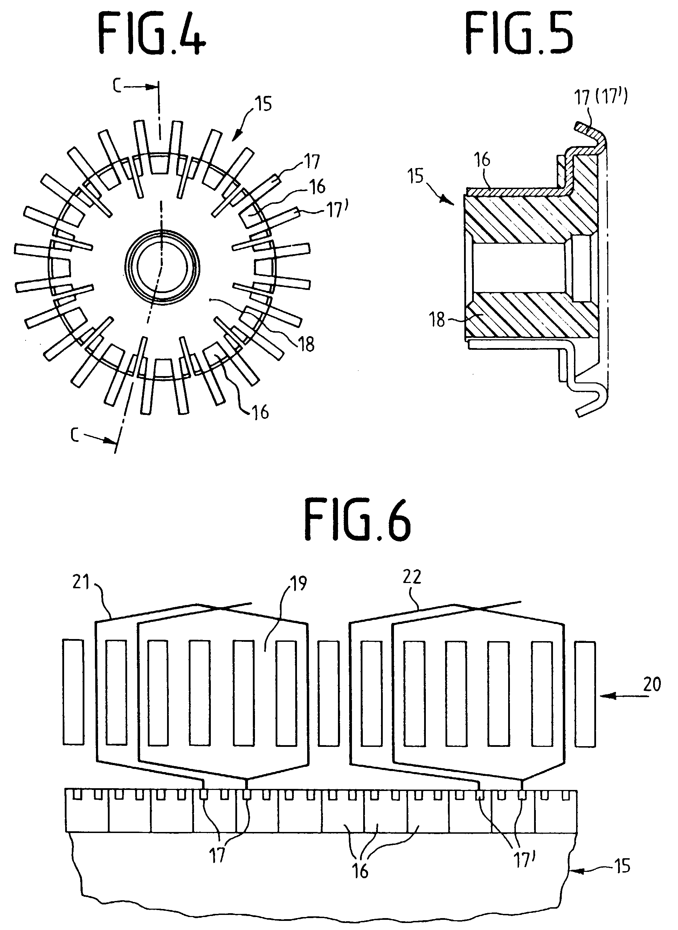

Der erfindungsgemäße Hakenkollektor 15 gemäß dem Ausführungsbeispiel nach den Figuren 4 bis 6 enthält je Kollektorlamelle 16 zwei Haken 17, 17', die in Umfangsrichtung des Kollektors im Abstand nebeneinander am Kollektor angeformt sind. Beim Bewickeln der Nuten 19 des Ankers 20 mit einer Parallel-Wicklung 21,22 wird, wie aus Figur 6 erkennbar ist, die erste Wicklung 21 an den Haken 17 der Lamellen 16 des Kollektors 15 befestigt und mit der jeweils zugehörigen Kollektorlamelle 16 kontaktiert, während die zweite Wicklung 22 am Haken 17' der Kollektorlamellen 16 fixiert und kontaktiert wird.

Zu diesem Zweck sind die Flyer und die Schalthülse asymmetrisch an der Wickelmaschine angeordnet. Das Bewickeln von Ankern mit nach der Erfindung ausgebildeten Hakenkollektoren ermöglicht einerseits die Verwendung größerer Drahtquerschnitte und beseitigt andererseits Schweißprobleme.

Es besteht auch die Möglichkeit, ein Drahtende der Parallelwicklung, z.B. den Drahtanfang A, unter den einen Haken, z.B. den Haken 17', einer Kollektorlamelle 16 zu legen und das Drahtende E zusammen mit der Wicklungsdrahtschieife 22' unter den benachbarten Haken 17 der besagten Kollektorlamelle zu führen. (Siehe Figur 7). Alternativ können auch Wicklungsanfang und Wicklungsende der Parallelwicklung an einen Haken und die Micklungsdröhtschleife am anderen Haken der zugehörigen Kollektorlamelle befestigt und mit der Kollektorlamelle kontaktiert werden.

Bei der maschinellen Bewicklung eines Ankers nach der herkömmlichen Methode würde es an sich ausreichen, an zwei einander gegenüberliegenden Lamellen 16 jeweils zwei Haken 17, 17' anzuformen. In diesem Fall wäre jedoch eine zusätzliche Steuereinrichtung erforderlich, die bewirkt, daß sich diese Doppelhaken-Lamellen bei Beginn des Wickelvorgangs in der jeweils richtigen Position befinden.
Bei in einem Zug durchgeschleiften Wicklungen 21 und 22 wäre es an sich ausreichend, lediglich eine Kollektorlamelle 16 mit zwei Haken 17 und 17' zu versehen.
Aus ökonomischen Gründen hat es sich indessen als zweckmäßig erwiesen, an sämtlichen Lamellen 16 des Kollektors 15 zwei Haken 17 und 17' anzuformen.

Der Kollektor 16 gemäß den Figuren 4 und 5 besteht aus einem nabenförmigen Träger 18 aus einem elektrisch isolierenden Kunststoff, in den die Kollektorlamellen 16 mit den angeformten Haken 17 und 17' eingebettet sind.
Die Haken 17, 17' können gegebenenfalls auch im Winkel zueinander an der bzw. an den Kollektorlamellen 16 angeformt sein.

Um insbesondere bei Kollektoren mit geringem Durchmesser den gegenseitigen Abstand der beiden Haken 17 und 17' in Umfangsrichtung vergrößern zu können, sind diese Haken radial nach oben aufgebördelt und in Richtung vom wicklungsseitigen Ende der Kollektorlamellen 16 weg unter einem geeigneten Winkel umgebogen (siehe Fig. 5).

## Patentansprüche

1. Kollektor mit am wicklungsseitigen Ende jeder Kollektorlamelle angeformten Haken zur Befestigung der Drähte der Ankerwicklung und deren Kontaktierung mit der jeweiligen Kollektorlamelle, wobei wenigstens zwei Drähte der Ankerwicklung radial nebeneinanderliegend am Kollektor befestigt sind,
dadurch gekennzeichnet,
daß jede Lamelle (16) des Kollektors (15) zwei Haken (17,17') aufweist, welche in Umfangsrichtung der jeweiligen Kollektorlamelle (16) räumlich nebeneinander an der Kollektorlamelle (16) angeformt sind, und daß die Haken (17,17') radial nach außen versetzt und in Richtung vom wicklungsseitigen Ende der Kollektorlamelle (16) weg abgebogen sind.

## Claims

1. Collector with a hook that is formed at the end of each collector lamina as see in the direction of the winding, said hook is provided for attaching the wires of a rotor winding and for contacting each wire with the respective collector lamina, whereby at least two wires are attached radial side-by-side with said collector,
caracterized in, that
each lamina (16) comprises two hooks (17,17'), said hooks (17,17') are formed spatial side-by-side at said collector lamina (16) as seen in the direction of the circumference of the respective collector lamina (16),
said hooks (17,17') are displaced radial to the outside, and said hooks (17,17') are bended off apart from the lamina (16) as seen in the direction of the winding.

## Revendications

1. Collecteur avec un crochet qui' est formé au bout de la bobinage de chaque ailette du collecteur, regardé au sense de la bobinage,
ledit crochet est prévue pour arrêter les fils d'une bobinage d'induit et pour assembler les fils avec leurs ailettes du collecteur respectives,
à quoi au moins deux fils de la bobinage d'induit sont assemblés avec le collecteur à la maniére que les au moins deux fils se trouvent radialment côte à côte,
caracterizé par
chaque ailette (16) du collecteur (15) posède deux crochet (17,17') qui sont formés spatialment côte à côte à l'ailette (16), au sense de la périmètre de l'ailette (16) respective, et les crochets (17, 17') sont déplacés radialment à l'extérieur et les crochet (17, 17') sont tournés lointain au direction du bout de l'ailette (16), regardé au sense de la bobinage.
